(19) Europäisches Patentamt
European Patent Office
Office européen des brevets

(11) **EP 2 178 329 B1**

(12) **EUROPEAN PATENT SPECIFICATION**

(45) Date of publication and mention of the grant of the patent:
**12.08.2015 Bulletin 2015/33**

(21) Application number: **09173360.0**

(22) Date of filing: **16.10.2009**

(51) Int Cl.:
***H04W 92/02*** *(2009.01)* *H04W 88/06* *(2009.01)*
*H04W 88/16* *(2009.01)*

(54) **Method to interface over mobile and fixed communication networks and communication system**

Verfahren zum Koppeln über mobile und feste Kommunikationsnetzwerke und Kommunikationssystem

Procédé d'interfaçage dans des réseaux de communications mobiles et fixes et système de communication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.10.2008 ES 200802921**

(43) Date of publication of application:
**21.04.2010 Bulletin 2010/16**

(73) Proprietors:
- **Vodafone Group PLC**
  **Newbury**
  **Berkshire RG14 2FN (GB)**
- **Vodafone España, S.A.**
  **28108 Alcobendas (ES)**

(72) Inventors:
- **Dominguez Romero, Francisco**
  **E-28050, Madrid (ES)**
- **Zas Couce, Luis**
  **28050, Madrid (ES)**
- **Perez de la Rosa, Jose Angel**
  **28050, Madrid (ES)**

(74) Representative: **Boult Wade Tennant**
**Verulam Gardens**
**70 Gray's Inn Road**
**London WC1X 8BT (GB)**

(56) References cited:
**EP-A1- 1 562 390** **WO-A1-03/037000**
**WO-A2-2008/045370** **US-B1- 6 961 573**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 178 329 B1

Printed by Jouve, 75001 PARIS (FR)

## Description

### Object of the invention

The object of the present invention is referred to a method and system to interface over mobile and fixed communication networks in order to guarantee bandwidth allocation for voice and data over 3G and 2G networks implemented in a DSL modem or in a mobile network user equipment. The proposed solution is to use a new interface, which will allow merging fixed networks with mobile networks and would be responsible for the following tasks:

- To translate the information received from 3G/2G Radio part to the DSL one and *vice versa.*
- To trigger the right commands to guarantee the QoS (Quality of Service) for the different services offered by the network operator.

### Background of the invention

In the current state of the art several systems are described that would be considered the prior art of the present invention. European patent application EP 1562390 A1 describes a method of switching to a wireless backup connection in a customer premises equipment CPE. A link monitoring mechanism supervises operation of the wireline link and generates a fault signal upon detection of a specified under-performance, failure, or overloading condition of the broadband wireline access connection. A data switching mechanism switches the user traffic received over the user interface between the wireline and the wireless link according to the fault signal. The US patent application US2008013553 describes a method of activating multiple bearer services in a long term evolution (LTE) wireless communication system including multiple bearers. At least one of the multiple bearers is activated during initial attach procedures which combine an attach procedure with activate packet data protocol (PDP) context activation procedures. In one embodiment, LTE attach procedures are implemented for multi-bearer services activation that establishes an LTE direct general packet radio service (GPRS) tunnelling protocol (GTP) tunnel or normal GTP two-tunnels operation. In another embodiment, the initial attach procedures are used to activate a default PDP context to be followed by modified PDP context activation procedures for multi-bearer services activation. These procedures can be used to establish a modified LTE direct GTP tunnel or a normal GTP two-tunnels operation.

The US patent application US20070258433 describes an apparatus for use in allocating resource in a wireless communication system, where the apparatus comprises mapping logic arranged to map one or more services to individual radio bearers of a plurality of radio bearers; reporting logic arranged to indicate buffer occupancy for the plurality of radio bearers; and prioritization logic arranged to prioritize the allocated resource across multiple wireless communication units on a radio bearer basis.

The French patent application FR2860679 describes a method that involves identifying available service bearers from information provided by a modem connecting a user terminal to a public land mobile network. A parameter of quality of service interfering into the selection of the service bearer is determined. The service bearer is selected corresponding to the parameter, either automatically by a software module or manually by a user of a mobile terminal.

The US patent application US20060258353 describes a method to select a bearer service for communication between a mobile terminal and a mobile network, where at least one bearer service is implemented in the mobile network, includes defining a set of requirements for the bearer service, obtaining information about selectable bearer services, comparing the set of requirements for the bearer service and the obtained information about selectable bearer services, and making a decision to accept or reject at least one of the selectable bearer services for communication based on the comparison.

The US patent application US6304595 describes methods and arrangements pertaining to mobile telephone modems. According to the invention, the mobile telephone modem includes memory means in which one or more ranking orders of data bearer services is/are stored. In response to a call request, one of the stored ranking orders is selected. If only one ranking order is stored, this ranking order will, of course, be selected. Calling is first carried out with the highest ranked data bearer service in the selected ranking order. If a call connection is not made, it is determined on the basis of an error message from the mobile telephone network whether or not the highest ranked data bearer service is supported by the mobile telephone network. If the highest ranked data bearer service is not supported by the mobile telephone network, the calling procedure is repeated sequentially with respect to the lower ranked data bearer services, until a call connection has been made or until it is determined that the data bearer service concerned is supported by the mobile telephone network but that connection of the call has, nevertheless, been unsuccessful, for instance because the called DTE unit is engaged or disconnected.

The US patent application US2005237933 describes a method of delivering services in a wireless communications system comprising a radio access network and a core network, the method comprising the steps of: establishing a radio access bearer for delivering one of a set of services to an end user via a signalling channel, each service having certain delivery requirements; determining in the radio access network that the delivery requirement for one of said services cannot be met; advising the core network that the delivery requirement for the said one service cannot be met; and providing a radio access bearer to allow at least one other service in the set to be delivered to that end user.

The US patent application US2007270135 describes a method for operating mobile terminal devices and to mobile terminal devices having the capability of communicating via different radio communication connections. The invention relates to the selection of radio transmission channels especially in the field of mobile online gaming. The invention provides a method for selecting a carrier for wireless communication of a mobile electronic terminal device that can execute wireless online game applications by exchanging communication data with at least one remotely located device by using any of a plurality of distinct communication carriers. The method of the invention comprises wirelessly executing an online game application, retrieving a latency time period requirement for the game data transmissions for said executed online game application, determining available communication carriers for wireless communication, determining which of the available communication carriers is appropriate for the intended wireless communication based on latency time requirements of the executed wireless online game application, and selecting at least one of said available and appropriate communication carriers fulfilling said latency time period requirement for bearing the data transfer for said online game.

Therefore, it is not known from the prior art any system or method that guarantee bandwidth allocation in very sensitive to the traffic conditions (e.g. where the traffic is very sensitive to the jitter and traffic delay), using a common interface between a mobile network user equipment, like a USB dongle (USB device used as terminal in the mobile network), and the home gateway (HG), or DSL modem, used in fixed networks. In the same way, it is not known in the state of the art any apparatus that can merge both networks.

## Summary of the invention

Solving the aforementioned technical problems is achieved by a method for conditionally switching from a primary communication path to a secondary communication path according to independent claim 1, by a communication system according to claim 8 and by an apparatus according to claim 11. Advantageous embodiments are described in the dependent claims. In one example, the solution comprises at least, a new common interface that may be implemented either in the USB dongle or in a home gateway (HG), for instance the Vodafone [RTM] VoX home gateway or Vodafone Access Gateway (VAG), or in some cases in both which allows to merge mobile 3G/2G networks and fixed DSL networks, and it is configured for doing the following tasks:

- Firstly, it is configured to translate the information received from the 3G/2G radio part to the DSL and *vice versa.*
- Secondly, it is configured to trigger the right commands to guarantee the QoS (quality of service) for the different services offered by the network operator.
  In this new system, there are two options to send the traffic: The DSL connection and the 3G connection. These options define a primary and secondary path to carry the traffic (voice and data) wherein these two paths are configurable by the network operator. When the primary path fails, then the secondary path is used.
  As a result, the invention provides
- A backup solution that consists on offering a secondary path in case of any DSL link failure at any of the different upper layers, and
- An instant activation solution that consists on providing to the end costumer the solution as customer receives the device.

Moreover, in the lack of 3G coverage in some areas in which the network operator wants to offer DSL services in conjunction with the instant activation and backup solutions is the challenge to cope with by sending this traffic over 2G networks. Nevertheless, due to the negotiation between the 2G Radio Network and the Core Network in case of lack of Radio Resources, it is implemented a mechanism which allows mobile network operators (such as Vodafone [RTM]) to control the QoS for some of the services offered (POTS, Faxes,...etc.).

## Preferred embodiment of the invention

In a preferred embodiment of the present invention, there are two options to send the traffic: the DSL connection and the 3G connection. Then, it is defined a primary and a secondary paths to carry the traffic. These 2 paths are configurable by the operator. When the primary path fails, then the secondary is used.
The main purposes could be as follows:

- backup solution consists of offering a secondary path in case of any DSL link failure at any of the different upper layers and

- Instant activation consists of proving to end customer the solution as soon as customer receives the device.

Moreover, in_the lack of 3G coverage in some areas in which mobile network operators want to offer DSL services in conjunction with the instant activation and backup solutions is the challenge to cope with by sending this traffic over 2G networks. Nevertheless, due to the negotiation between the 2G Radio Network and the Core Network in case of lack of Radio Resources, it is needed to implement a mechanism which allows mobile network operators to control the QoS for some of the services offered (POTS, Faxes...).
As it is highlighted above the common interface must work as it is described above:

**(1) In case of 3G coverage.**

**(1.1) Data:**

At this point and only in data activations the HG shall trigger the activation of the PDP context in the 3G network by means of AT commands which shall contain the following information:

- APN, including its respective user and password
- Type of RB (Radio Bearer) e.g.: HSPA, 384/64,128/64, ..
- GBR (Guaranteed Bit Rate) e.g.: numeric value $\geq 0$ (in case of Conversational or Streaming TC).
- TC (Traffic Class): Conversational, Streaming, Interactive, Background.
- ARP (Allocation Retention Priority): Gold (1), Silver (2), Bronze (3).

All the above parameters will be configurable.
RB Type: This is the RB requested and the initial request to the Core.
GBR: the amount of capacity to allocate during the call set-up in order to guarantee the quality of the service.

$$GBR_T = \sum_i GBR(service_i)$$

This parameter $GBR(service_i)$ will be configurable.
If the primary path is not available yet, then HG shall check the status of the secondary path and if the secondary path is available (because the USB dongle indicates, it so to the HG) then HG shall have the following admission algorithms:

HSPA coverage:

In HSPA environment and as long as the HG attempts to get the expected resource from the 3G Network, it could be the following situations: The terminal can detect if there is HSPA coverage through a parameter sent by the network in the system information. The following data HSPA coverage algorithm is implemented:

```
 If (HSPA coverage) = true then
   Request of RB with APN, GBR, TC (Interactive or Background) and ARP
 If RB granted = HSPA then
   PDP context activation
   Switch to the secondary path the traffic selected.
 Else
   If (R99 PS DCH (dedicated channel) allocated < GBR) then instant activation for
Data connection rejected
   Else instant activation for Data connection admitted.
Else instant activation for Data connection rejected
```

R99 coverage:

When the HSPA coverage it is not supported by the Network. The following data R99 coverage routine is implemented:

```
 If (R99 PS Coverage) = true then
   Request of R99 RB with APN, 384/384, TC (Interactive or Background) and ARP
 If RB granted = RB requested then
```

```
   PDP context activation;
   Switch to the secondary path the traffic selected;
   Else
   If (R99 PS DCH allocated < GBR) then instant activation for Data connection rejected;
   Else instant activation for Data connection admitted
; Else instant activation for Data connection rejected;
```

**(1.2) Voice:**

The solution consists of transporting the VoIP (SIP) over an existing HSPA RB which is the most efficient solution from resources consumption point of view. Only in voice activations the HG shall trigger by means of AT commands which shall contain the following information to activate the PDP context.

- APN including respective user and password.
- Type of RB (Radio Bearer) e.g.: HSPA
- GBR (Guaranteed Bit Rate) e.g.: numeric value > 0 (depending on the number of voice lines)
- TC (Traffic Class): Conversational, Streaming.
- ARP (Allocation Retention priority): Gold (1), Silver (2), Bronze (3).

All the above parameters will be configured by the Operator and each one of them could be applicable on customer basis. If the primary path yet is not available, then HG shall check the status of the secondary path and if the secondary path is available (because the USB dongle indicates it so to the HG) then HG shall have the following admission algorithms:

HSPA coverage:

In HSPA environment and as long as the HG attempts to get the expected resource from the Mobile Network, the following voice HSPA/3G coverage routine is implemented in the user equipment (UE):

```
If (HSPA coverage) = true then
        Request of HSPA RB with APN, GBR, TC (Streaming) and ARP
    If RB granted = HSPA then
        PDP context activation.
        Switch to the secondary path the traffic selected.
Else
If (HSPA coverage) = false and (3G coverage= true) then
        Request of CS R99 RB with GBR,(12,2; tables attached)
```

| 3G Radio Bearers Table | BW allocation (Kbps) |
|---|---|
| AMR at 12k2 (CS domain) | |
| AMR at 7.95 | |
| AMR at 5.9 | |
| AMR at 4.75 | |
| WB-AMR at max 12.65 | |
| CS C 64/64 | |
| CS 14.4/14.4 | |
| CS 28.8/28.8 | |

(continued)

| 3G Radio Bearers Table | BW allocation (Kbps) |
|---|---|
| CS 57.6/57.6 | |

**If** RB granted ≥ RB requested **then**

PDP context activation.

Switch to the secondary path the traffic selected.

**Else**

**If** ((HSPA coverage) = false and (3G coverage= false)) or (3G connectivity rejection= true) **then**

Request of CS 2G with GBR,(section (2) 2G coverage)

Else instant activation for Voice connection rejected

It could be configurable whether in case of connection failure during the HSPA establishment due to network limitation to go directly to the CS domain and to retry the connection over either CS R99 or 2G or to reject instant activation for Voice connection

**(2) In case of 2G coverage:**

The common interface for a 2G environment shall have the following: In the 2G common interface there shall be an assignment table with all the existing 2G Radio Bearers in the moment of the allocation of the channel.

| 2G Radio Bearer (Voice) | BW allocation (Kbps) |
|---|---|
| Full Rate (FR) | 13(*) |
| Enhanced Full Rate (EFR) | 12.2(*) |
| Half Rate (HR) | 5.6(*) |
| AMR | 12.2 - 10.2(*) |
| AMR-Half Rate | 4.75 - 5.15 - 5.90 - 6.70 - 7.40 - 7.95(*). |
| . | . |
| . | . |

And one table with the Fixed Codecs within the Home Gateway (HG).

| Voice Codec in HG | BW allocation (Kbps) |
|---|---|
| G.711a | 64(*) |
| G.711u | 64(*) |
| G.723.1 | 5.3 - 6.3 (*) |
| G.722 | 48 - 56 - 64 (*) |
| . | . |

(continued)

| Voice Codec in HG | BW allocation (Kbps) |
|---|---|
| . | . |
| (*) only non-limitative examples. | |

The 2G common interface shall calculate the BW required to establish the communication:

$$\mathrm{Re}quired_BW = N * BW_allocation(HG)$$

- ***Required_BW:*** it is the BW required to support that type of connection
- ***N:*** Number of analog voice line (N=1 for 2G because of network limitations)
- ***BW allocation:*** it is the BW allocated per each codec within the HG.

The 2G common interface shall receive a message from the USB dongle interface indicating the Radio Bearer (RB) proposed by the Network, and then the 2G Common interface shall match this RB with the BW assignment table indicated above.

**Claims**

**1.** A method for conditionally switching from a primary communication path to a secondary communication path in a system comprising a mobile communication network including at least one user equipment (UE) and a fixed line communication network including a home gateway (HG), wherein the primary communication path is assigned to the fixed network and operable to carry the traffic of voice and data services and the secondary communication path is assigned to the mobile network and operable to carry the traffic of voice and data services, wherein these two paths are configurable by a network operator **characterised in that**
the method comprising:

providing a common interface between the at least one user equipment and the home gateway;
the home gateway activating a PDP context for the user equipment in the mobile communication network via the common interface;
checking the status of the primary communication path and the secondary path;
switching from the primary communication path to the secondary communication path when the primary path is not available, wherein said step of switching further comprises:

evaluating the quality of service of said primary communication path,
and when the quality of service of said primary communication path is evaluated to be of inadequate quality, switching to said secondary communication path providing that said secondary communication path is capable of guaranteeing adequate quality of service.

**2.** Method of claim 1, wherein the communication service is a data communication service, and wherein the PDP context is activated by means of AT commands which shall contain the following configurable parameters:

- APN command, including its respective user and password
- Type of standardized RB (Radio Bearer)
- GBR (Guaranteed Bit Rate) that is the amount of capacity to allocate during the call set-up in order to guarantee the quality of the service:

$$GBR_T = \sum_i GBR(service_i)$$

- TC (Traffic Class), at least one selected from:

◦ Conversational,
◦ Streaming,
◦ Interactive, and
◦ Background,

- ARP (Allocation Retention Priority): Gold (1), Silver (2), Bronze (3).

**3.** Method of claims 1 or 2 **characterized in that** the step of requesting an expected services resource from the secondary communication path is determined through a parameter sent by the mobile network in the system information, implementing a data HSPA coverage routine in the user equipment (UE).

**4.** Method of claims 1 or 2 **characterized in that** the step of requesting an expected services resource from the secondary communication path is determined by a data R99 coverage routine implemented in the user equipment (UE).

**5.** Method of claim 1 wherein the communication service is a voice communication service, and wherein the PDP context is activated by means of AT commands which shall contain the following configurable parameters:

- APN parameter, including respective user and password.
- Type of RB (Radio Bearer)
- GBR (Guaranteed Bit Rate) that is a numeric value depending on the number of voice lines
- TC (Traffic Class) parameter selected from

◦ Conversational,
◦ Streaming,

- ARP (Allocation Retention priority): Gold (1), Silver (2), Bronze (3).

**6.** Method of claim 5 **characterized in that** in HSPA environment the step of requesting an expected services resource from the secondary communication path is determined by a voice HSPA/3G coverage routine implemented in the user equipment (UE).

**7.** Method of any one of the previous claims **characterized in that** the secondary communication path is a 2G communication path;
**in that** in the step of requesting an expected services resource from the secondary communication path, the common interface shall calculate the bandwidth required to establish the communication in accordance with the equation:

$$required_BW = N * BW_allocation(HG);$$

where the required_BW is the BW required to support that type of connection, N is the number of analog voice lines, and BW allocation is the BW allocated per each codec within the home gateway; and
**in that** the common interface shall receive a message from the user equipment indicating the Radio Bearer (RB) proposed by the network, and then the common interface shall match this RB with a BW allocation value obtained from a BW assignment table.

**8.** Communication system including
a common interface for interfacing between at least one user equipment (UE) in a mobile communication network and a home gateway (HG) in a fixed communication network, wherein the fixed network defines a primary communication path and is operable to carry the traffic of voice and data services between the home gateway and the core network of a mobile network operator and wherein the mobile communication network defines a secondary communication path and is operable to carry the traffic of voice and data services between the at least one user equipment and the core network of the mobile network operator; **characterised in that**
the common interface comprises:

means configured for activating a data communication, said means including the means for activating a PDP context for the user equipment in the mobile communication network;

means configured for checking the status of the primary communication path and the secondary communication path;
means for switching from the primary communication path to the secondary communication path when the primary path is not available, wherein said means for switching from the primary communication path to the secondary communication path are configured to:

evaluate the quality of service of said primary communication path, and
when the quality of service of said primary communication path is evaluated to be of inadequate quality, to switch to said secondary communication path providing that said secondary communication path is capable of guaranteeing adequate quality of service.

**9.** Communication system of claim 8 **characterized in that** the user equipment (UE) is a USB dongle.

**10.** Communication system of claim 8 or 9 **characterized in that** the home gateway (HG) is a DSL modem

**11.** Apparatus for implementing a common interface between at least one user equipment (UE) in a mobile communication network and a home gateway (HG) in a fixed communication network, wherein the fixed network defines a primary communication path and is operable to carry the traffic of voice and data services and wherein the mobile communication network defines a secondary communication path and is operable to carry the traffic of voice and data services, wherein these two paths are configurable by a network operator **characterised in that** it comprises, at least:

means for activating a PDP context for the user equipment in the mobile communication network;
means configured for checking the status of the primary communication path and the secondary communication path; and
means for switching from the primary communication path to the secondary communication path when the primary communication path is not available;
wherein said means for switching from the primary communication path to the secondary communication path are configured to:

evaluate the quality of service of said primary communication path, and
when the quality of service of said primary communication path is evaluated to be of inadequate quality, to switch to said secondary communication path providing that said secondary communication path is capable of guaranteeing adequate quality of service.

## Patentansprüche

**1.** Verfahren zum konditionellen Umschalten von einem primären Kommunikationspfad auf einen sekundären Kommunikationspfad in einem System, das ein mobiles Kommunikationsnetz mit wenigstens einem Benutzergerät (UE) und einem leitungsgebundenen Kommunikationsnetz mit einem Home-Gateway (HG) umfasst, wobei der primäre Kommunikationspfad dem Festnetz zugeordnet ist und die Aufgabe hat, den Verkehr von Sprach- und Datendiensten zwischen dem Home-Gateway und dem Kernnetz eines Mobilfunknetzbetreibers zu befördern, und der sekundäre Kommunikationspfad dem Mobilfunknetz zugeordnet ist und die Aufgabe hat, den Verkehr von Sprach- und Datendiensten zwischen dem wenigstens einen Benutzergerät und dem Kernnetz des Mobilfunknetzbetreibers zu befördern, **dadurch gekennzeichnet, dass**
das Verfahren Folgendes beinhaltet:

Bereitstellen einer gemeinsamen Schnittstelle zwischen dem wenigstens einen Benutzergerät und dem Home-Gateway;
wobei das Home-Gateway einen PDP-Kontext für das Benutzergerät in dem mobilen Kommunikationsnetz über die gemeinsame Schnittstelle aktiviert;
Prüfen des Status des primären Kommunikationspfades und des sekundären Kommunikationspfades,
Umschalten von dem primären Kommunikationspfad auf den sekundären Kommunikationspfad, wenn der primäre Pfad nicht zur Verfügung steht, wobei der genannte Schritt des Umschaltens ferner das Beurteilen der Dienstequalität des genannten primären Kommunikationspfades beinhaltet, wenn die Dienstequalität des genannten primären Kommunikationspfades unzureichend ist,
Umschalten auf den genannten sekundären Kommunikationspfad unter der Voraussetzung, dass der sekundäre Kommunikationspfad eine ausreichende Dienstequalität garantieren kann.

2. Verfahren nach Anspruch 1, wobei der Kommunikationsdienst ein Datenkommunikationsdienst ist und wobei der PDP-Kontext mit AT-Befehlen aktiviert wird, die die folgenden konfigurierbaren Parameter enthalten sollen:

- einen APN-Befehl, einschließlich seines jeweiligen Benutzers und Passworts;
- Typ des standardisierten RB (Radio Bearer);
- GBR (garantierte Bitrate), d.h. die Menge an Kapazität, die bei der Rufeinrichtung zuzuweisen ist, um die Qualität des Dienstes zu garantieren:

$$GBR_T = \sum_i GBR(service_i)$$

- TC (Verkehrsklasse), wenigstens eine, die ausgewählt ist aus:
    - ◦ Gespräch,
    - ◦ Streaming,
    - ◦ interaktiv und
    - ◦ Hintergrund
- ARP (Allocation Retention Priority): Gold (1), Silber (2), Bronze (3).

3. Verfahren nach Anspruch 1 oder 2, **dadurch gekennzeichnet, dass** der Schritt des Anforderns einer erwarteten Diensteressource vom sekundären Kommunikationspfad durch einen Parameter bestimmt wird, der von dem Mobilfunknetz in den Systeminformationen gesendet wird, Implementieren einer Daten-HSPA-Deckungsroutine in dem Benutzergerät (UE).

4. Verfahren nach Anspruch 1 oder 2, **dadurch gekennzeichnet, dass** der Schritt des Anforderns einer erwarteten Diensteressource von dem sekundären Kommunikationspfad durch eine in dem Benutzergerät (UE) implementierte Daten-R99-Abdeckungsroutine bestimmt wird.

5. Verfahren nach Anspruch 1, wobei der Kommunikationsdienst ein Sprachkommunikationsdienst ist und wobei der PDP-Kontext mit AT-Befehlen aktiviert wird, die die folgenden konfigurierbaren Parameter enthalten sollen:

- APN-Parameter einschließlich des jeweiligen Benutzers und Passworts;
- Typ von RB (Radio Bearer);
- GBR (garantierte Bitrate), d.h. ein numerischer Wert je nach der Anzahl von Sprachleitungen;
- TC-(Verkehrsklasse)-Parameter, ausgewählt aus
    - ◦ Gespräch,
    - ◦ Streaming,
- ARP (Allocation Retention Priority): Gold (1), Silver (2), Bronze (3).

6. Verfahren nach Anspruch 5, **dadurch gekennzeichnet, dass** in der HSPA-Umgebung der Schritt des Anforderns einer erwarteten Diensteressource von dem sekundären Kommunikationspfad durch eine im Benutzergerät (UE) implementierte Sprach-HSPA/3G-Abdeckungsroutine bestimmt wird.

7. Verfahren nach einem der vorherigen Ansprüche, **dadurch gekennzeichnet, dass** der sekundäre Kommunikationspfad ein 2G-Kommunikationspfad ist;
dadurch, dass in dem Schritt des Anforderns einer erwarteten Diensteressource von dem sekundären Kommunikationspfad die gemeinsame Schnittstelle die zum Aufbauen der Kommunikation gemäß der folgenden Gleichung benötigte Bandbreite berechnet:

$$benötigte_BW = N * BW_Zuweisung(HG);$$

wobei die benötigte_BW die zum Unterstützen dieses Verbindungstyps benötigte Bandbreite ist, N die Anzahl von analogen Sprachleitungen ist und die Bandbreitenzuweisung die pro Codec im Home-Gateway zugewiesene BW ist; und
dadurch, dass die gemeinsame Schnittstelle eine Nachricht vom Benutzergerät empfängt, die den vom Netzwerk vorgeschlagenen Radio Bearer (RB) anzeigt, und die gemeinsame Schnittstelle dann diesen RB mit einem aus einer BW-Zuweisungstabelle erhaltenen BW-Zuweisungswert abstimmt.

**8.** Kommunikationssystem, das Folgendes umfasst:

eine gemeinsame Schnittstelle für eine Verbindung zwischen wenigstens einem Benutzergerät (UE) in einem mobilen Kommunikationsnetz und einem Home-Gateway (HG) in einem festen Kommunikationsnetz, wobei das Festnetz einen primären Kommunikationspfad definiert und die Aufgabe hat, den Verkehr von Sprach- und Datendiensten zwischen dem Home-Gateway und dem Kernnetz eines Mobilfunknetzbetreibers zu befördern, und wobei das mobile Kommunikationsnetz einen sekundären Kommunikationspfad definiert und die Aufgabe hat, den Verkehr von Sprach- und Datendiensten zwischen dem wenigstens einen Benutzergerät und dem Kernnetz des Mobilfunknetzbetreibers zu befördern; **dadurch gekennzeichnet, dass**
die gemeinsame Schnittstelle Folgendes umfasst:

Mittel, konfiguriert zum Aktivieren einer Datenkommunikation, wobei die genannten Mittel die Mittel zum Aktivieren eines PDP-Kontexts für das Benutzergerät in dem mobilen Kommunikationsnetz beinhalten;
Mittel, konfiguriert zum Prüfen des Status des primären Kommunikationspfades und des sekundären Kommunikationspfades;
Mittel zum Umschalten von dem primären Kommunikationspfad auf den sekundären Kommunikationspfad, wenn der primäre Kommunikationspfad nicht zur Verfügung steht;
wobei das genannte Mittel zum Umschalten vom primären Kommunikationspfad zum Beurteilen der Dienstequalität des genannten primären Kommunikationspfades konfiguriert ist, wenn die Dienstequalität des genannten primären Kommunikationspfades als unzureichend beurteilt wird, und zum Umschalten auf den genannten sekundären Kommunikationspfad unter der Voraussetzung, dass der genannte sekundäre Kommunikationspfad eine ausreichende Dienstequalität garantieren kann.

**9.** Kommunikationssystem nach Anspruch 8, **dadurch gekennzeichnet, dass** das Benutzergerät (UE) ein USB-Dongle ist.

**10.** Kommunikationssystem nach Anspruch 8 oder 9, **dadurch gekennzeichnet, dass** das Home-Gateway (HG) ein DSL-Modem ist.

**11.** Vorrichtung zum Implementieren einer gemeinsamen Schnittstelle zwischen wenigstens einem Benutzergerät (UE) in einem mobilen Kommunikationsnetz und einem Home-Gateway (HG) in einem festen Kommunikationsnetz, wobei das Festnetz einen primären Kommunikationspfad definiert und die Aufgabe hat, den Verkehr von Sprach- und Datendiensten zwischen dem Home-Gateway and dem Kernnetz eines Mobilfunknetzbetreibers zu befördern, und wobei das mobile Kommunikationsnetz einen sekundären Kommunikationspfad definiert und die Aufgabe hat, den Verkehr von Sprach- und Datendiensten zwischen dem wenigstens einen Benutzergerät und dem Kernnetz des Mobilfunknetzbetreibers zu befördern;
**dadurch gekennzeichnet, dass** sie wenigstens Folgendes umfasst:

Mittel zum Aktivieren eines PDP-Kontexts für das Benutzergerät in dem mobilen Kommunikationsnetz;
Mittel, konfiguriert zum Prüfen des Status des primären Kommunikationspfades und des sekundären Kommunikationspfades; und
Mittel zum Umschalten von dem primären Kommunikationspfad auf den sekundären Kommunikationspfad, wenn der primäre Kommunikationspfad nicht zur Verfügung steht;
wobei das genannte Mittel zum Umschalten von dem primären Kommunikationspfad auf den sekundären Kommunikationspfad zum Beurteilen der Dienstequalität des genannten primären Kommunikationspfades konfiguriert ist, wenn die Dienstequalität des genannten primären Kommunikationspfades als unzureichend beurteilt wird, und zum Umschalten auf den genannten sekundären Kommunikationspfad unter der Voraussetzung, dass der genannte sekundäre Kommunikationspfad eine ausreichende Dienstequalität garantieren kann.

## Revendications

1. Un procédé de commutation conditionnelle d'un trajet de communication primaire vers un trajet de communication secondaire dans un système comprenant un réseau de communication mobile comprenant au moins un équipement utilisateur (UE) et un réseau de communication à ligne fixe comprenant une passerelle de rattachement (HG), où le trajet de communication primaire est attribué au réseau fixe et est conçu de façon à transporter le trafic de services vocaux et de données entre la passerelle de rattachement et le réseau central d'un opérateur de réseau mobile, et le trajet de communication secondaire est attribué au réseau mobile et est conçu de façon à transporter le trafic de services vocaux et de données entre le au moins un équipement utilisateur et le réseau central de l'opérateur de réseau mobile, **caractérisé en ce que**
le procédé comprend :

   la fourniture d'une interface commune entre le au moins un équipement utilisateur et la passerelle de rattachement,
   l'activation par la passerelle de rattachement d'un contexte PDP pour l'équipement utilisateur dans le réseau de communication mobile par l'intermédiaire de l'interface commune,
   la vérification du statut du trajet de communication primaire et du trajet secondaire,
   la commutation du trajet de communication primaire vers le trajet de communication secondaire lorsque le trajet primaire n'est pas disponible, où ladite opération de commutation comprend en outre l'évaluation de la qualité de service dudit trajet de communication primaire lorsque la qualité de service dudit trajet de communication primaire est évaluée être d'une qualité inadéquate,
   la commutation vers ledit trajet de communication secondaire à condition que ledit trajet de communication secondaire soit capable de garantir une qualité de service adéquate.

2. Le procédé selon la Revendication 1, où le service de communication est un service de communication de données, et où le contexte PDP est activé au moyen de commandes AT qui contiendront les paramètres configurables suivants :

   - Commande APN, comprenant ses utilisateur et mot de passe respectifs,
   - Type de RB standardisée (porteuse radio),
   - GBR (débit binaire garanti) qui est la quantité de capacité à attribuer au cours de l'établissement de l'appel afin de garantir la qualité du service :

$$GBR_T = \sum_i GBR(service_i)$$

   - TC (classe de trafic), au moins une classe sélectionnée parmi :

      ◦ Conversationnelle,
      ◦ En flux continu,
      ◦ Interactive, et
      ◦ En arrière-plan,

   - ARP (priorité de rétention d'attribution) : Or (1), Argent (2), Bronze (3).

3. Le procédé selon les Revendications 1 ou 2 **caractérisé en ce que** l'opération de demande d'une ressource de services attendue provenant du trajet de communication secondaire est déterminée par l'intermédiaire d'un paramètre envoyé par le réseau mobile dans les informations système, mettant en oeuvre une procédure de couverture HSPA de données dans l'équipement utilisateur (UE).

4. Le procédé selon les Revendications 1 ou 2 **caractérisé en ce que** l'opération de demande d'une ressource de services attendue provenant du trajet de communication secondaire est déterminée par une procédure de couverture R99 de données mise en oeuvre dans l'équipement utilisateur (UE).

**5.** Le procédé selon la Revendication 1 où le service de communication est un service de communication vocale, et où le contexte PDP est activé au moyen de commandes AT qui contiendront les paramètres configurables suivants :

- Paramètre APN, comprenant un utilisateur et un mot de passe respectifs,
- Type de RB (porteuse radio),
- GBR (débit binaire garanti) qui est une valeur numérique qui dépend du nombre de lignes vocales,
- Paramètre TC (classe de trafic) sélectionnée parmi
  - Conversationnelle,
  - En flux continu,
- ARP (Priorité de rétention d'attribution): Or (1), Argent (2), Bronze (3).

**6.** Le procédé selon la Revendication 5 **caractérisé en ce que**, dans un environnement HSPA, l'opération de demande d'une ressource de services attendue provenant du trajet de communication secondaire est déterminée par une procédure de couverture HSPA/3G vocale mise en oeuvre dans l'équipement utilisateur (UE).

**7.** Le procédé selon l'une quelconque des Revendications précédentes **caractérisé en ce que** le trajet de communication secondaire est un trajet de communication 2G,
**en ce que**, dans l'opération de demande d'une ressource de services attendue provenant du trajet de communication secondaire, l'interface commune calculera la bande passante nécessaire pour établir la communication conformément à l'équation :

$$BW_nécessaire = N * attribution_de_BW\ (HG),$$

où BW_nécessaire est la bande passante nécessaire pour prendre en charge ce type de connexion, N est le nombre de lignes vocales analogiques, et attribution_de_BW est la bande passante attribuée à chaque codec à l'intérieur de la passerelle de rattachement, et
**en ce que** l'interface commune recevra un message provenant de l'équipement utilisateur indiquant la porteuse radio (RB) proposée par le réseau, et ensuite l'interface commune mettra en correspondance cette RB avec une valeur d'attribution de bande passante obtenue à partir d'une table d'attribution de bandes passantes.

**8.** Un système de communication comprenant
une interface commune destinée à un interfaçage entre au moins un équipement utilisateur (UE) dans un réseau de communication mobile et une passerelle de rattachement (HG) dans un réseau de communication fixe, où le réseau fixe définit un trajet de communication primaire et est conçu de façon à transporter le trafic de services vocaux et de données entre la passerelle de rattachement et le réseau central d'un opérateur de réseau mobile et où le réseau de communication mobile définit un trajet de communication secondaire et est conçu de façon à transporter le trafic de services vocaux et de données entre le au moins un équipement utilisateur et le réseau central de l'opérateur de réseau mobile, **caractérisée en ce que**
l'interface commune comprenant :

un moyen configuré de façon à activer une communication de données, ledit moyen comprenant le moyen d'activation d'un contexte PDP pour l'équipement utilisateur dans le réseau de communication mobile,
un moyen configuré de façon à vérifier le statut du trajet de communication primaire et du trajet de communication secondaire,
un moyen de commutation du trajet de communication primaire vers le trajet de communication secondaire lorsque le trajet de communication primaire n'est pas disponible,
où ledit moyen de commutation du trajet de communication primaire vers le trajet de communication secondaire est configuré de façon à évaluer la qualité de service dudit trajet de communication primaire lorsque la qualité de service dudit trajet de communication primaire est évaluée être d'une qualité inadéquate, et de façon à commuter vers ledit trajet de communication secondaire à condition que ledit trajet de communication secondaire soit capable de garantir une qualité de service adéquate.

**9.** Le système de communication selon la Revendication 8 **caractérisé en ce que** l'équipement utilisateur (UE) est une clé électronique USB.

**10.** Le système de communication selon les Revendications 8 ou 9 **caractérisé en ce que** la passerelle de rattachement (HG) est un modem DSL.

**11.** Un appareil destiné à la mise en oeuvre d'une interface commune entre au moins un équipement utilisateur (UE) dans un réseau de communication mobile et une passerelle de rattachement (HG) dans un réseau de communication fixe, où le réseau fixe définit un trajet de communication primaire et est conçu de façon à transporter le trafic de services vocaux et de données entre la passerelle de rattachement et le réseau central d'un opérateur de réseau mobile, et où le réseau de communication mobile définit un trajet de communication secondaire et est conçu de façon à transporter le trafic de services vocaux et de données entre le au moins un équipement utilisateur et le réseau central de l'opérateur de réseau mobile,
**caractérisé en ce qu'**il comprend, au moins :

un moyen d'activation d'un contexte PDP pour l'équipement utilisateur dans le réseau de communication mobile,
un moyen configuré pour la vérification du statut du trajet de communication primaire et du trajet de communication secondaire, et
un moyen de commutation du trajet de communication primaire vers le trajet de communication secondaire lorsque le trajet de communication primaire n'est pas disponible,
où ledit moyen de commutation du trajet de communication primaire vers le trajet de communication secondaire est configuré de façon à évaluer la qualité de service dudit trajet de communication primaire lorsque la qualité de service dudit trajet de communication primaire est évaluée être d'une qualité inadéquate, et de façon à commuter vers ledit trajet de communication secondaire à condition que ledit trajet de communication secondaire soit capable de garantir une qualité de service adéquate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1562390 A1
- US 2008013553 A
- US 20070258433 A
- FR 2860679
- US 20060258353 A
- US 6304595 B
- US 2005237933 A
- US 2007270135 A